# EUROPEAN PATENT APPLICATION

(11) **EP 4 588 949 A1**
(43) Date of publication of application: **23.07.2025**
(21) Application number: 24152956.9
(22) Date of filing: 19.01.2024
(51) Int. Cl.: C08G 18/10, C08L 75/04

(54) **CURABLE SILANE-TERMINATED POLYMER COMPOSITION WITH IMPROVED ADHESION ON PLASTIC SUBSTRATES**

(71) Applicant: Sika Technology AG, 6340 Baar (CH)
(72) Inventor: OERTLI, Marcel, 8408 Winterthur (CH)
(74) Representative: Sika Patent Attorneys

(57) **Abstract**

The invention relates to a moisture-curable composition, comprising at least one organic polymer containing reactive terminal silane groups, whereby the organic polymer does not contain any disulfide linkages and at least one polysulfide-based polymer containing reactive terminal silane groups.

The moisture-curable composition shows excellent adhesion on plastic substrates and is particularly suitable as an adhesive, coating or sealant.

## Description

### Technical Field

The invention relates to moisture-curable compositions based on silane-terminated polymers and their use as adhesives.

### State of the art

Curable compositions based on polymers containing reactive silane groups play an important role in many industrial applications, for example as adhesives, sealants or coatings. Polymers containing reactive silane groups are in particular organic polymers containing reactive silane groups, which are also referred to as "silane-functional polymers", "silane-modified polymers" (SMP) or "silane-terminated polymers" (STP). Compositions containing these polymers harden via crosslinking reaction of the reactive silane groups on the polymers, which hydrolyze under the influence of moisture, condense with one another as silanol groups and thus form a covalently bonded network and, macroscopically, a cured material. Advantages of silane-functional organic polymers commonly are improved adhesive properties and compatibility with substrate materials.

With the increasing use of plastic and plastic products due to advantages such as reduced weight, reduced material cost, corrosion resistance and increased durability, the need to effectively and efficiently bond, seal or coat plastic parts is also increasing.

The adhesion on plastic substrates is usually very challenging, because most plastic surfaces have a comparatively low surface free energy and thus only enable a low interfacial adhesion.

Commercially available adhesives for plastics are generally limited to highly specialized adhesives, such as epoxy- and poly(methyl methacrylate)-based products.

Classic silane-functional polymer compositions generally do not effectively bond on many plastic substrates, such as polyvinyl chloride (PVC), glass fiber reinforced plastic (GFK) or acrylonitrile butadiene styrene (ABS).

Use of adhesion promoters or other pretreatments, for example physical or thermal treatment, can circumvent the problem, but they are expensive and need to be applied beforehand.

Some silane-functional polymers have shown promising plastic adhesion, such as those containing acrylic moieties, but they are more limited in their use because of their higher viscosity, worse mechanical properties and generally higher price.

Many commercially available silane-functional polymers contain other backbones, such as polyether backbones.

Polyether-containing silane-terminal polymer compositions that effectively seal, bond or coat plastics without employing a primer or surface pretreatment are currently not widely known in the state of the art.

There is thus an increasing demand for a curable silane-functional polymer composition that is suitable for adhesion on plastic substrates and possesses versatile mechanical properties, especially for silane-functional polymer compositions that contain polyether backbones.

### Summary of the invention

It is therefore an object of the present invention to provide a curable, in particular one-component, composition based on organic silane-functional polymers that is suitable for adhesion on plastic substrates. Surprisingly it was found that the addition of polysulfide-containing silane-functional polymers can achieve this object. The present invention achieves this with the features of independent claim 1.

A composition comprising at least one organic polymer containing reactive terminal silane groups, whereby the organic polymer does not contain any polysulfide linkages and at least one polysulfide-based polymer containing reactive terminal silane groups, shows a significantly improved adhesion on plastic substrates, such as polyvinyl chloride (PVC), glass fiber reinforced plastic (GFK) or acrylonitrile butadiene styrene (ABS).

Further aspects of the invention are the subject of further independent claims. Particularly preferred embodiments of the invention are the subject of the dependent claims.

### Ways of executing the invention

The present invention relates in a first aspect to a one-component moisture curable composition, comprising
- at least one organic polymer **P** containing reactive terminal silane groups, whereby **P** does not contain any polysulfide linkages;
- at least one polysulfide-based polymer **PSP** containing reactive terminal silane groups;
- preferably at least one adhesion promoter **AP;**
- preferably at least one catalyst **C;**
- optionally at least one plasticizer **PL**;
wherein the mass ratio of organic polymer **P** to polysulfide-based polymer **PSP** ranges from 300:1 to 1:1, preferably from 20:1 to 1:1, most preferably from 10:1 to 5:1.

The term "polymer" in the present document includes, on one hand, a collection of macromolecules that are uniform chemically but differ with respect to the degree of polymerization, the molecular weight and the chain length and were synthesized by a polyreaction (polymerization, polyaddition, polycondensation). On the other hand, this term also includes derivatives of such a group of macromolecules of polyreactions, i.e., compounds obtained by reactions, such as additions or substitutions of functional groups on given macromolecules and they may be chemically uniform or chemically heterogeneous. This term also includes so-called prepolymers, i.e., reactive oligomeric preadducts, whose functional groups are involved in the synthesis of macromolecules.

The term "organic polymer" encompasses a collective of macromolecules that are chemically homogeneous but differ in relation to degree of polymerization, molar mass and chain length, which has been prepared by a poly reaction (polymerization, polyaddition, polycondensation) and has a majority of carbon atoms in the polymer backbone, and reaction products of such a collective of macromolecules. Polymers having a polyorganosiloxane backbone (commonly referred to as "silicones") are not organic polymers in the context of the present document.

Substance names beginning with "poly", such as polyol or polyisocyanate, refer to substances containing, in a formal sense, two or more of the functional groups that occur in their name per molecule.

The term "radical" is used in this document in a formal sense, meaning a molecular rest bound to an atom by a covalent bond, while the bond is formally "cut" to describe the molecular rest attached to it.

The term "silane" or "organosilane" refers to compounds which on the one hand have at least one, customarily two or three, hydrolyzable groups, preferably alkoxy groups or acyloxy groups, bonded directly to the silicon atom via Si-O bonds, and on the other hand have at least one organic radical bonded directly to the silicon atom via an Si-C bond. Silanes having alkoxy groups or acyloxy groups are also known to the person skilled in the art as organoalkoxy silanes and organoacyloxy silanes, respectively.

Correspondingly, the term "silane group" identifies the silicon-containing group bonded to the organic radical of the silane, which is bonded by the Si-C bond to a compound. The silanes and their silane groups have the property of undergoing hydrolysis in the event of contact with moisture. This produces organosilanols, i.e., silicon-organic compounds containing one or more silanol groups (Si-OH groups) and, through subsequent condensation reactions, organosiloxanes, in other words silicon-organic compounds containing one or more siloxane groups (Si-O-Si groups).

In the present document, the term "reactive silane group" refers to a silyl group that is bonded to an organic radical and has one to three, especially two or three, hydrolyzable substituents or hydroxyl groups on the silicon atom. Particularly useful hydrolyzable substituents are alkoxy groups. These silane groups are also referred to as "alkoxysilane groups". Reactive silane groups may also be in partly or fully hydrolyzed form, for example as silanols.

The term "silane-functional" identifies compounds which have silane groups. "Silane-functional polymers", accordingly, are polymers, more particularly organic polymers, which have at least one, preferably two or more, e.g., two, silane groups. The silane groups may take the form of side groups or, preferably end groups. Silane-functional polymers are also referred to as silane-terminated polymers (STP). γ-silane-functional polymers are polymers in which the Si atom of the silane group is linked to the polymer via a 1,3-propylene bridge.

"Organofunctional compound" refers to a compound that contains a functional group that is bound via a carbon atom. For example, "aminofunctional compound" is a compound having an aminoalkyl group.

"Hydroxysilane", "isocyanatosilane", "aminosilane" and "mercaptosilane" refer respectively to organoalkoxysilanes having one or more hydroxyl, isocyanato, amino or mercapto groups on the organic radical in addition to the silane group.

"Primary amino group" refers to an NH₂ group that is bonded to an organic radical, and "secondary amino group" refers to an NH group that is bonded to two organic radicals which may also together be part of a ring, and "tertiary amino group" refers to an N group that is bonded to three organic radicals, two or three of which together may also be part of one or more rings.

Accordingly, "primary aminosilanes" are aminosilanes comprising a primary amino group and "secondary aminosilanes" are aminosilanes comprising a secondary amino group. The latter also encompasses compounds having both a primary and a secondary amino group.

The term "polyether containing reactive silane groups" also encompasses organic polymers which contain silane groups and which, in addition to polyether units, may also contain urethane groups, urea groups or thiourethane groups. Such polyethers containing reactive silane groups may also be referred to as "polyurethanes containing reactive silane groups".

"Polyoxyalkylene radical" refers to a linear or branched hydrocarbyl radical which contains ether groups and contains more than two repeat units of the (OR) type in succession, where R is a linear or branched alkylene radical, as for example from the polyaddition of ethylene oxide or 1 ,2-propylene oxide onto starter molecules having two active hydrogen atoms.

The term "polyurethane polymer" includes all polymers synthesized by the so-called diisocyanate polyaddition process. This also includes polymers which are almost or entirely free of urethane groups. Examples of polyurethane polymers include polyether polyurethanes, polyester polyurethanes, polyether polyureas, polyureas, polyester polyureas, polyisocyanurates and polycarbodiimides.

"Monomeric diisocyanate" refers to an organic compound having two isocyanate groups separated by a divalent hydrocarbyl radical having 4 to 15 carbon atoms.

The term "polysulfide" includes all polymers which contain alternating chains of several sulfur atoms and hydrocarbons and optionally other heteroatoms such as oxygen or nitrogen.

"Polysulfide linkage" describes the S-S bond occurring in polysulfides.

"Plasticizer" refers to nonvolatile substances that are not chemically incorporated into the polymer in the course of curing and that exert a plasticizing effect on the cured polymer.

The compositions comprising the silane-functional polymer are "moisturecuring", meaning that in the presence of water or moisture, more particularly atmospheric moisture the above-described hydrolysis and condensation reactions on the silane groups take place, causing crosslinking of the polymer molecules and curing of the composition. The curing is also referred to as crosslinking.

"Molecular weight" is understood in the present document to mean the molar mass (in grams per mole) of a molecule or a molecule residue.

"Average molecular weight" is understood herein to mean the number-average Mₙ of an oligomeric or polymeric mixture of molecules or radicals, which is typically determined by means of gel permeation chromatography (GPC) against polystyrene as standard especially with tetrahydrofuran as mobile phase, refractive index detector and evaluation from 200 g/mol.

"Weight percent" or "percentage by weight", and its abbreviation "wt.-%" refer to the weight percentage of a certain compound in a total composition, if not otherwise defined.

The terms "weight" and "mass" are used interchangeably in this document and refer to the mass as a property of a physical body and commonly measured in kilograms (kg).

The term "molar ratio" in connection with reactive groups relates to the ratio of the number of molar equivalents of the corresponding reactive groups.

The term "mass ratio" relates to the ratio of the masses of two components.

"Storage-stable" or "storable" refers to a substance or composition when it can be stored at room temperature in a suitable container over a prolonged period, typically at least 3 months up to 6 months or more, without any change in its application or use properties, especially in the viscosity and crosslinking rate, to a degree of relevance for the use thereof as a result of the storage.

A dotted or dashed line in the formulae in this document in each case represents the bond between a substituent and the corresponding molecular radical.

"Room temperature" refers here to a temperature of 23°C.

The term "standard climatic conditions" refers to a temperature of 23±1 °C and a relative air humidity of 50±5%.

All industrial standards and norms cited in this document refer to the respective edition in force on the time of filing of the first application of this invention, if not otherwise defined.

The composition according to the invention contains at least one organic polymer **P** containing reactive terminal silane groups, whereby **P** does not contain any polysulfide linkages.

Preferably, the organic polymer **P** containing reactive terminal silane groups is free of isocyanate groups. It is liquid, in particular at room temperature.

The organic polymer **P** containing reactive terminal silane groups preferably has silane groups of formula (I) 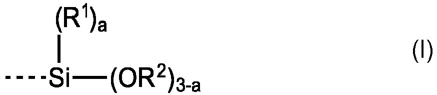 wherein
R¹ is a linear or branched, monovalent hydrocarbyl radical having 1 to 8 carbon atoms;
R² is a linear or branched, monovalent alkoxy radical having 1 to 10 carbon atoms and which optionally contains one or more C-C multiple bonds, and/or cycloaliphatic, and/or aromatic moieties,
a is 0, 1 or 2, especially 0 or 1.

Preferably, R¹ is methyl or ethyl.

Preferably, R² is methyl or ethyl or isopropyl.

More preferably, R² is methyl. Polymers of this kind containing silane groups are particularly reactive.

Also more preferably, R² is ethyl. Such polymers containing silane groups are particularly storage-stable and toxicologically advantageous.

Aside from the silane groups of formula (I), the organic polymer **P** preferably has no further silane groups that do not correspond to the formula (I). In particular, it has no isocyanate groups attached directly to the polyether triol via an isocyanatosilane. Such silane groups attached via isocyanatosilane decrease strength and thermal stability after curing.

Preferably, the organic polymer **P** has an average of 1.5 to 4, more preferably 1.8 to 3.4, silane groups per molecule.

Preferably, the organic polymer **P** has an average molecular weight Mₙ within a range from 5000 to 30 000 g/mol, preferably 6000 to 20 000 g/mol, especially 7000 to 15 000 g/mol.

Preferably, the composition according to the precent invention comprises, based on the total composition, between 10 and 40 wt.-%, preferably between 15 and 30 wt.-%, most preferably between 20 and 25 wt.-% of organic polymer **P.**

Preferably, the organic polymer **P** containing reactive terminal silane groups is derived from an intermediate polymer containing isocyanate groups which is reacted with an organoalkoxysilane having an isocyanate-reactive organic group such as an amino-, mercapto-, or hydroxy group.

The intermediate polymer containing isocyanate groups is obtainable by the reaction of at least one polyol with at least one polyisocyanate, more particularly a monomeric diisocyanate, resulting in a polyurethane polymer containing free isocyanate groups. This reaction may be accomplished by bringing the polyol and the polyisocyanate to reaction with customary methods, as for example from temperatures of 40°C to 160°C, optionally with accompanying use of suitable catalysts, the polyisocyanate being metered such that these isocyanate groups are in a stochiometric excess in relation to the hydroxyl groups of the polyol.

In the reaction, the OH groups of the polyether polyol react with the isocyanate groups of the monomeric diisocyanate. This results also in what are called chain extension reactions, in that there is reaction of OH groups and/or isocyanate groups of products of the reaction between polyol and monomeric diisocyanate. The higher the molar NCO/OH ratio chosen, the lower the level of chain extension reactions that takes place, and the lower the polydispersity of the polymer obtained. A measure of the chain extension reaction is the average molecular weight of the polymer, or the width and distribution of the peaks in the GPC analysis. A further measure is the effective NCO content of the polymer freed of monomers relative to the theoretical NCO content calculated from the reaction of every OH group with a monomeric diisocyanate.

The excess of polyisocyanate is selected in particular such that the amount of free isocyanate groups present in the resulting intermediate polymer after the reaction of all of the hydroxyl groups of the polyol is from 0.1 to 5 wt.-%, preferably 0.1 to 2.5 wt.-%, more preferably 0.2 to 1 wt.-%, based on the overall polymer.

Preferred polyurethane polymers are those having the stated amount of free isocyanate groups and obtained from the reaction of diisocyanates with high molecular mass diols in an NCO:OH ratio of 1.5:1 to 2.2:1.

Suitable monomeric diisocyanates are commercial aromatic or aliphatic diisocyanates, especially diphenylmethane 4,4'-diisocyanate, optionally containing proportions of diphenylmethane 2,4'- and/or 2,2'-diisocyanate (MDI), tolylene 2,4-diisocyanate or mixtures thereof with tolylene 2,6-diisocyanate (TDI), phenylene 1,4-diisocyanate (PDI), naphthalene 1,5-diisocyanate (NDI), hexane 1,6-diisocyanate (HDI), 2,2(4),4-trimethylhexamethylene 1,6-diisocyanate (TMDI), cyclohexane 1,3- or 1,4-diisocyanate, 1-isocyanato-3,3,5-trimethyl-5-isocyanatomethylcyclohexane (isophorone diisocyanate or IPDI), perhydro-diphenylmethane 2,4'- or 4,4'-diisocyanate (HMDI), 1,3- or 1,4-bis(isocyanatomethyl)cyclohexane, m- or p-xylylene diisocyanate (XDI), m-tetramethylxylylene diisocyanate (TMXDI), or mixtures thereof.

More preferably, the monomeric diisocyanate is selected from the group consisting of MDI, TDI, HDI and IPDI, in particular MDI and IPDI.

Suitable polyols for preparing the polyurethane polymer are, in particular, polyether polyols, polyester polyols, and polycarbonate polyols, and also mixtures of these polyols. Particularly suitable are polyoxyethylene polyols and polyoxypropylene polyols, more particularly polyoxyethylene diols, polyoxypropylene diols, polyoxyethylene triols, and polyoxypropylene triols.

Especially suitable are polyoxyalkylene diols or polyoxyalkylene triols having a degree of unsaturation of less than 0.02 meq/g and having an average molecular weight in the range from 1'000 to 30'000 g/mol, and also polyoxyethylene diols, polyoxyethylene triols, polyoxypropylene diols, and polyoxypropylene triols having an average molecular weight of 400 to 20'000 g/mol. Likewise particularly suitable are so-called ethylene oxide-terminated ("EO-endcapped", ethylene oxide-endcapped) polyoxypropylene polyols.

These stated polyols preferably have an average molecular weight of 250 to 30'000 g/mol, more particularly of 1'000 to 30'000 g/mol, and an average OH functionality in the range from 1.6 to 3.

The intermediate polymer containing isocyanate groups is highly storage-stable with exclusion of moisture.

The intermediate polymer containing isocyanate groups from which the organic polymer **P** is derived, is reacted with an organoalkoxysilane, preferably with at least one amino-, mercapto- or hydroxysilane which affords the organic polymer **P** containing reactive terminal silane groups.

The amino-, mercapto- or hydroxysilane for the reaction with the intermediate polymer containing isocyanate groups is preferably an organoalkoxysilane of formula (II). 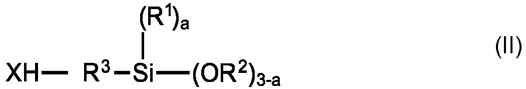 wherein
R¹ is a linear or branched, monovalent hydrocarbyl radical having 1 to 8 carbon atoms;
R² is a linear or branched, monovalent alkoxy radical having 1 to 10 carbon atoms and which optionally contains one or more C-C multiple bonds, and/or cycloaliphatic, and/or aromatic moieties,
a is 0, 1 or 2, especially 0 or 1.

Preferably, R¹ is methyl or ethyl.

Preferably, R² is methyl or ethyl or isopropyl.

More preferably, R² is methyl. Polymers of this kind containing silane groups are particularly reactive.

Also more preferably, R² is ethyl. Such polymers containing silane groups are particularly storage-stable and toxicologically advantageous.

R³ is a divalent hydrocarbyl radical having 1 to 12 carbon atoms that optionally has one or more C-C multiple bonds, cyclic and/or aromatic moieties and optionally one or more heteroatoms, especially an amido, carbamate or morpholino group;
X is O, S or NR⁴ where R⁴ is H or a monovalent hydrocarbyl radical having 1 to 20 carbon atoms that optionally has heteroatoms in the form of alkoxysilyl, ether or carboxylic ester groups.

Preferred organoalkoxysilanes of formula (II) are selected from the group consisting of 3-aminopropyltrimethoxysilane, 3-aminopropyldimethoxymethylsilane, 4-aminobutyltrimethoxysilane, 4-amino-3-methylbutyltrimethoxysilane, 4-amino-3,3-dimethylbutyltrimethoxysilane, N-ethyl-3-amino-(2-methylpropyl)trimethoxysilane, N-butyl-3-aminopropyltrimethoxysilane, N-phenyl-3-aminopropyltrimethoxysilane, diethyl N-(3-trimethoxysilylpropyl)aminosuccinate, diethyl N-(3-dimethoxymethylsilylpropyl)aminosuccinate, 3-mercaptopropyltrimethoxysilane, 3-mercaptopropyldimethoxymethylsilane, N-(3-trimethoxysilylpropyl)-2-hydroxypropanamide, N-(3-trimethoxysilylpropyl)-4-hydroxypentanamide, N-(3-trimethoxysilylpropyl)-4-hydroxyoctanamide, N-(3-trimethoxysilylpropyl)-5-hydroxydecanamide, N-(3-trimethoxysilylpropyl)-2-hydroxypropyl carbamate, 2-morpholino-4(5)-(2-trimethoxysilylethyl)cyclohexan-1-ol, 2-morpholino-4(5)-(2-trimethoxysilylethyl)cyclohexan-1-ol, 1-morpholino-3-(3-(triethoxysilyl)propoxy)propan-2-ol, and the corresponding analogs with ethoxy groups in place of the methoxy groups on the silicon.

A particularly preferred organoalkoxysilane of formula (II) is diethyl N-(3-trimethoxysilylpropyl)aminosuccinate, diethyl N-(3-triethoxysilylpropyl)aminosuccinate, diethyl N-(3-dimethoxymethylsilylpropyl)aminosuccinate, diethyl N-(3-diethoxymethylsilylpropyl)aminosuccinate, N-(3-trimethoxysilylpropyl)-2-hydroxypropanamide, N-(3-triethoxysilylpropyl)-2-hydroxypropanamide, N-(3-dimethoxymethylsilylpropyl)-2-hydroxypropanamide or N-(3-diethoxymethylsilylpropyl)-2-hydroxypropanamide.

A very particularly preferred organoalkoxysilane of formula (II) is diethyl N-(3-trimethoxysilylpropyl)aminosuccinate, diethyl N-(3-triethoxysilylpropyl)aminosuccinate, diethyl N-(3-dimethoxymethylsilylpropyl)aminosuccinate or diethyl N-(3-diethoxymethylsilylpropyl)aminosuccinate.

The reaction is carried out at a temperature within a range from 20 to 160°C, especially 60 to 120°C. A catalyst is optionally used here, especially a tertiary amine or a metal compound, especially a bismuth(III), zinc(II), zirconium(IV) or tin(II) compound or an organotin(IV) compound.

The organic polymer **P** containing reactive terminal silane groups is storage-stable with exclusion of moisture.

The composition according to the invention contains at least one polysulfide-based polymer **PSP** containing reactive terminal silane groups. The polysulfide-based polymer **PSP** is a polymer product obtained by reacting a thiol-containing polysulfide prepolymer **PS** with a suitable silane-containing functionalizing agent.

The thiol-containing polysulfide prepolymer **PS** is preferably of formula (III) 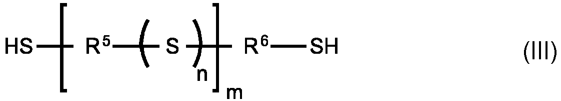 wherein
R⁵ is a linear or branched, monovalent hydrocarbon radical having 1 to 8 carbon atoms and which optionally contains one or more heteroatoms, especially oxygen, preferably ether oxygen;
R⁶ is a linear or branched, monovalent hydrocarbon radical having 1 to 8 carbon atoms and which optionally contains one or more heteroatoms, especially oxygen, preferably ether oxygen;
n is between 2 and 4, preferably 2;
m is between 1 and 25, preferably between 5 and 10.

Preferred thiol-containing polysulfide prepolymer **PS** of formula (III) are polymers of bis-(ethylene oxy)methane containing disulfide linkages. These preferred thiol-containing polysulfide prepolymers **PS** preferably have an average molecular weight Mₙ ranging from 1'000 to 10'000 g/mol, preferably between 1'000 and 4'000 g/mol. An especially preferred thiol-containing polysulfide prepolymer **PS** is Thiokol^{®} LP-33 (Toray Fine Chemicals Co., Ltd.). In the reaction of the thiol-containing polysulfide prepolymer **PS** with suitable silane-containing functionalizing agent, the SH groups of polysulfide prepolymer **PS** react with the functionalizing agent. This results in what is called an endcapping reaction, in that there is a reaction of SH groups and/or functionalizing agent of products of the reaction between **PS** and functionalizing agent. The product of the reaction is the polysulfide-based polymer **PSP.**

In a first preferred embodiment, the functionalizing agent is an organoalkoxysilane that contains a terminal epoxy group preferably of formula (IV) 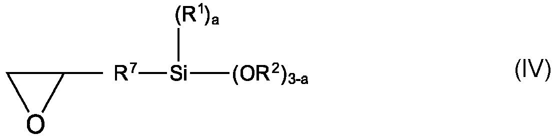 wherein
R¹ is a linear or branched, monovalent hydrocarbyl radical having 1 to 8 carbon atoms;
R² is a linear or branched, monovalent alkoxy radical having 1 to 10 carbon atoms and which optionally contains one or more C-C multiple bonds, and/or cycloaliphatic, and/or aromatic moieties,
a is 0, 1 or 2, especially 0 or 1.

Preferably, R¹ is methyl or ethyl.

Preferably, R² is methyl or ethyl or isopropyl.

More preferably, R² is methyl. Polymers of this kind containing silane groups are particularly reactive.

Also more preferably, R² is ethyl. Such polymers containing silane groups are particularly storage-stable and toxicologically advantageous.

R⁷ is a divalent hydrocarbyl radical having 1 to 12 carbon atoms that optionally has one or more C-C multiple bonds, cyclic and/or aromatic moieties and optionally one or more heteroatoms, preferably oxygen.

Preferred organoalkoxysilane of formula (IV) are in particular γ-glycidoxyproplytrimethoxysilane, γ-glycidoxyproplytriethoxysilane and γ-glycidoxyproplydimethoxymethylsilane.

The reaction of the thiol-containing polysulfide prepolymer **PS** with the epoxyfunctional organoalkoxysilane is done according to the state of the art, preferably in a molaric ratio of 1:1, with a tertiary amine catalyst as used with epoxy reactions.

In a second preferred embodiment, the functionalizing agent is a monomeric diisocyanate. The polysulfide-based polymer **PSP** can be obtained by subsequent endcapping of the remaining isocyanate group with an organoalkoxysilane that contains an amino group, a hydroxy group or a mercapto group.

Suitable monomeric diisocyanates are commercial aromatic or aliphatic diisocyanates, especially diphenylmethane 4,4'-diisocyanate, optionally containing proportions of diphenylmethane 2,4'- and/or 2,2'-diisocyanate (MDI), tolylene 2,4-diisocyanate or mixtures thereof with tolylene 2,6-diisocyanate (TDI), phenylene 1,4-diisocyanate (PDI), naphthalene 1,5-diisocyanate (NDI), hexane 1,6-diisocyanate (HDI), 2,2(4),4-trimethylhexamethylene 1,6-diisocyanate (TMDI), cyclohexane 1,3- or 1,4-diisocyanate, 1-isocyanato-3,3,5-trimethyl-5-isocyanatomethylcyclohexane (isophorone diisocyanate or IPDI), perhydro-diphenylmethane 2,4'- or 4,4'-diisocyanate (HMDI), 1,3- or 1,4-bis(isocyanatomethyl)cyclohexane, m- or p-xylylene diisocyanate (XDI), m-tetramethylxylylene diisocyanate (TMXDI), or mixtures thereof.

More preferably, the monomeric diisocyanate is selected from the group consisting of MDI, TDI, HDI and IPDI, in particular MDI and IPDI.

Suitable organoalkoxysilanes that contains an amino group, a hydroxy group, or a mercapto group are preferably of formula (V) 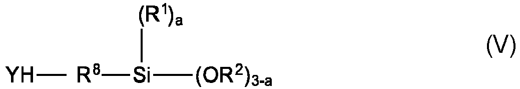 wherein
R¹ is a linear or branched, monovalent hydrocarbyl radical having 1 to 8 carbon atoms;
R² is a linear or branched, monovalent alkoxy radical having 1 to 10 carbon atoms and which optionally contains one or more C-C multiple bonds, and/or cycloaliphatic, and/or aromatic moieties,
a is 0, 1 or 2, especially 0 or 1.

Preferably, R¹ is methyl or ethyl.

Preferably, R² is methyl or ethyl or isopropyl.

More preferably, R² is methyl. Polymers of this kind containing silane groups are particularly reactive.

Also more preferably, R² is ethyl. Such polymers containing silane groups are particularly storage-stable and toxicologically advantageous.

R⁸ is a divalent hydrocarbyl radical having 1 to 12 carbon atoms that optionally has one or more C-C multiple bonds, cyclic and/or aromatic moieties and optionally one or more heteroatoms, preferably oxygen or nitrogen.

Y is O, S or NR⁹ where R⁹ is a monovalent hydrocarbyl radical having 1 to 20 carbon atoms that optionally has heteroatoms in the form of alkoxysilyl, ether or carboxylic ester groups

Preferred organoalkoxysilanes that contain an amino group, a hydroxy group, or a mercapto group according to formula (V) are selected from the group consisting of 3-aminopropyltrimethoxysilane, 3-aminopropyldimethoxymethylsilane, 4-aminobutyltrimethoxysilane, 4-amino-3-methylbutyltrimethoxysilane, 4-amino-3,3-dimethylbutyltrimethoxysilane, N-ethyl-3-amino-(2-methylpropyl)trimethoxysilane, N-butyl-3-aminopropyltrimethoxysilane, N-phenyl-3-aminopropyltrimethoxysilane, diethyl N-(3-trimethoxysilylpropyl)aminosuccinate, diethyl N-(3-dimethoxymethylsilylpropyl)aminosuccinate, 3-mercaptopropyltrimethoxysilane, 3-mercaptopropyldimethoxymethylsilane, N-(3-trimethoxysilylpropyl)-2-hydroxypropanamide, N-(3-trimethoxysilylpropyl)-4-hydroxypentanamide, N-(3-trimethoxysilylpropyl)-4-hydroxyoctanamide, N-(3-trimethoxysilylpropyl)-5-hydroxydecanamide, N-(3-trimethoxysilylpropyl)-2-hydroxypropyl carbamate, 2-morpholino-4(5)-(2-trimethoxysilylethyl)cyclohexan-1-ol, 2-morpholino-4(5)-(2-trimethoxysilylethyl)cyclohexan-1-ol, 1-morpholino-3-(3-(triethoxysilyl)propoxy)propan-2-ol, and the corresponding analogs with ethoxy groups in place of the methoxy groups on the silicon.

The reaction of the thiol-containing polysulfide prepolymer **PS** with the monomeric diisocyanate and the subsequent endcapping with an organoalkoxysilane is done according to the state of the art.

In a third preferred embodiment, the functionalizing agent is an isocyanate-containing organoalkoxysilane according to formula (VI) 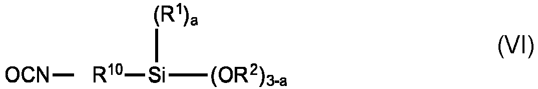 wherein
R¹ is a linear or branched, monovalent hydrocarbyl radical having 1 to 8 carbon atoms;
R² is a linear or branched, monovalent alkoxy radical having 1 to 10 carbon atoms and which optionally contains one or more C-C multiple bonds, and/or cycloaliphatic, and/or aromatic moieties,
a is 0, 1 or 2, especially 0 or 1.

Preferably, R¹ is methyl or ethyl.

Preferably, R² is methyl or ethyl or isopropyl.

More preferably, R² is methyl. Polymers of this kind containing silane groups are particularly reactive.

Also more preferably, R² is ethyl. Such polymers containing silane groups are particularly storage-stable and toxicologically advantageous;
R¹⁰ is a divalent hydrocarbyl radical having 1 to 12 carbon atoms that optionally has one or more C-C multiple bonds, cyclic and/or aromatic moieties and optionally one or more heteroatoms, preferably oxygen.

Examples of suitable isocyanate-containing organoalkoxysilane according to formula (VI) are isocyanatomethyl trimethoxysilane, isocyanatomethyl dimethoxymethylsilane, 3-isocyanatopropyl trimethoxysilane, 3-Isocyanatopropyl dimethoxymethylsilane, and their analogs with ethoxy or isopropoxy groups instead of the methoxy groups on the silicon atom. Most preferred are methoxysilanes.

The reaction of the thiol-containing polysulfide prepolymer **PS** with the isocyanate-containing organoalkoxysilane is done according to the state of the art.

In a fourth preferred embodiment the functionalizing agent is an alkene-containing organoalkoxysilane according to formula (VII) 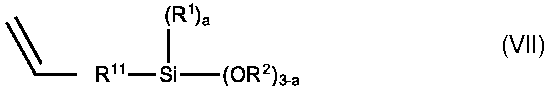 wherein
R¹ is a linear or branched, monovalent hydrocarbyl radical having 1 to 8 carbon atoms;
R² is a linear or branched, monovalent alkoxy radical having 1 to 10 carbon atoms and which optionally contains one or more C-C multiple bonds, and/or cycloaliphatic, and/or aromatic moieties,
a is 0, 1 or 2, especially 0 or 1.

Preferably, R¹ is methyl or ethyl.

Preferably, R² is methyl or ethyl or isopropyl.

More preferably, R² is methyl. Polymers of this kind containing silane groups are particularly reactive.

Also more preferably, R² is ethyl. Such polymers containing silane groups are particularly storage-stable and toxicologically advantageous;
R¹¹ is a divalent hydrocarbyl radical having 1 to 12 carbon atoms that optionally has one or more C-C multiple bonds, cyclic and/or aromatic moieties and optionally one or more heteroatoms, preferably oxygen.

Preferred alkene-containing organoalkoxysilanes according to formula (VII) are vinyltrimethoxysilane, vinyltriethoxysilane, vinyldimethoxymethylsilane, vinyldiethoxymethylsilane.

The reaction of the thiol-containing polysulfide prepolymer **PS** with the alkene-containing organoalkoxysilane is done according to the state of the art, where it is known as thiol-ene reaction or alkene hydrothiolation, as for example described in Polym. Chem., 2010, 1, 17-36.

Preferably, the composition according to the precent invention comprises, based on the total composition, between 0.1 and 15 wt.-%, preferably between 0.1 and 10 wt.-%, most preferably between 0.1 and 8 wt.-% of polysulfide-based polymer **PSP.**

The mass ratio of organic polymer **P** to polysulfide-based polymer **PSP** within the composition according to the invention ranges from 300:1 to 1:1, hence the composition contains between 1 and 300 weight parts of organic polymer **P** and 1 weight part of polysulfide-based polymer **PSP.** Preferably, the mass ratio of organic polymer **P** to polysulfide-based polymer **PSP** within the composition according to the invention ranges from 20:1 to 1:1, most preferably from 10:1 to 5:1.

The composition according to the invention further preferably comprises of at least one adhesion promoter **AP,** at least one catalyst **C,** and/orat least one plasticizer **PL.**

The adhesion promoter **AP** is preferably of formula (VIII) 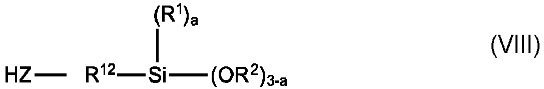 wherein
R¹ is a linear or branched, monovalent hydrocarbyl radical having 1 to 8 carbon atoms;
R² is a linear or branched, monovalent alkoxy radical having 1 to 10 carbon atoms and which optionally contains one or more C-C multiple bonds, and/or cycloaliphatic, and/or aromatic moieties,
a is 0, 1 or 2, especially 0 or 1.

Preferably, R¹ is methyl or ethyl.

Preferably, R² is methyl or ethyl or isopropyl.

More preferably, R² is methyl. Polymers of this kind containing silane groups are particularly reactive.

Also more preferably, R² is ethyl. Such polymers containing silane groups are particularly storage-stable and toxicologically advantageous;
R¹² is a divalent hydrocarbyl radical having 1 to 12 carbon atoms that optionally has one or more C-C multiple bonds, cyclic and/or aromatic moieties and optionally one or more heteroatoms, preferably oxygen.

Z is O, S or NR¹³ where R¹³ is H or a monovalent hydrocarbyl radical having 1 to 20 carbon atoms that optionally has heteroatoms in the form of alkoxysilyl, ether or carboxylic ester groups.

Suitable adhesion promoters **AP** are especially aminosilanes, mercaptosilanes, epoxysilanes, (meth)acrylosilanes, anhydridosilanes, carbamatosilanes, alkylsilanes or iminosilanes, or oligomeric forms of these silanes, or adducts of primary aminosilanes with epoxysilanes or (meth)acrylosilanes or anhydridosilanes. Particularly suitable are 3-glycidoxypropyltrimethoxysilane, 3-aminopropyltrimethoxysilane, N-(2-aminoethyl)-3-aminopropyltrimethoxysilane, N-(2-aminoethyl)-N'-[3-(trimethoxysilyl)propyl]ethylenediamine, 3-mercaptopropyltrimethoxysilane, 3-ureidopropyltrimethoxysilane or the corresponding silanes with ethoxysilane groups in place of the methoxysilane groups on the silicon, or oligomeric forms of these silanes.

Preferably, the composition according to the precent invention comprises, based on the total composition, between 0 and 10 wt.-%, preferably between 0 and 2 wt.-%, most preferably between 0 and 1 wt.-% of adhesion promoter **AP.**

The composition according to the invention contains at least one catalyst **C** that comprises or consists of metal, metal-organic compounds and/or nitrogen compounds, such as, organotin compounds, organotitanates, amines, amidines, guanidines or imidazoles.

Suitable catalysts **C** are metal catalysts and/or nitrogen compounds that accelerate the crosslinking of polymers containing silane groups.

Suitable metal catalysts are especially compounds of titanium, zirconium, aluminum, or tin, especially organotin compounds, organotitanates, organozirconates or organoaluminates, these compounds especially having alkoxy groups, aminoalkoxy groups, sulfonate groups, carboxyl groups, 1,3-diketonate groups, 1,3-ketoesterate groups, dialkyl phosphate groups or dialkyl pyrophosphate groups.

Particularly suitable organotin compounds are dialkyltin oxides, dialkyltin dichlorides, dialkyltin dicarboxylates, and dialkyltin diketonates, especially dibutyltin oxide, dibutyltin dichloride, dibutyltin diacetate, dibutyltin dilaurate, dibutyltin diacetylacetonate, dioctyltin oxide, dioctyltin dichloride, dioctyltin diacetate, dioctyltin dilaurate or dioctyltin diacetylacetonate, or alkyltin thioesters.

Particularly suitable organotitanates are
bis(ethylacetoacetato)diisobutoxytitanium(IV),
bis(ethylacetoacetato)diisopropoxytitanium(IV),
bis(acetylacetonato)diisopropoxytitanium(IV),
bis(acetylacetonato)diisobutoxytitanium(IV),
tris(oxyethyl)amineisopropoxytitanium(IV),
bis[tris(oxyethyl)amine]diisopropoxytitanium(IV), bis(2-ethylhexane-1,3-dioxy)titanium(IV), tris[2-((2-aminoethyl)amino)ethoxy]ethoxytitanium(IV), bis(neopentyl(diallyl)oxy)-diethoxytitanium(IV), titanium(IV) tetrabutoxide, tetra(2-ethylhexyloxy) titanate, tetra(isopropoxy) titanate or polybutyl titanate. Especially suitable are the commercially available products Tyzor^{®} AA, GBA, GBO, AA-75, AA-65, AA-105, DC, BEAT, BTP, TE, TnBT, KTM, TOT, TPT or IBAY (all from Dorf Ketal); Tytan PBT, TET, X85, TAA, ET, S2, S4 or S6 (all from Borica Company Ltd.) and Ken-React^{®} KR^{®} TTS, 7, 9QS, 12, 26S, 33DS, 38S, 39DS, 44, 134S, 138S, 133DS, 158FS or LICA^{®} 44 (all from Kenrich Petrochemicals).

Particularly suitable organozirconates are the commercially available products Ken-React^{®} NZ^{®} 38J, KZ^{®} TPPJ, KZ^{®} TPP, NZ^{®} 01, 09, 12, 38, 44 or 97 (all from Kenrich Petrochemicals) or Snapcure^{®} 3020, 3030, 1020 (all from Johnson Matthey & Brandenberger).

A particularly suitable organoaluminate is the commercially available product K-Kat 5218 (from King Industries).

Nitrogen compounds suitable as catalyst are especially amines such as, in particular, N-ethyldiisopropylamine, N,N,N',N'-tetramethylalkylenediamines, polyoxyalkyleneamines, 1,4-diazabicyclo[2.2.2]octane; aminosilanes such as, in particular, 3-aminopropyltrimethoxysilane, 3-aminopropyldimethoxylmethylsilane, N-(2-aminoethyl)-3-aminopropyltrimethoxysilane, N-(2-aminoethyl)-3-aminopropylmethyldimethoxysilane, N-(2-aminoethyl)-N'-[3-(trimethoxysilyl)propyl]ethylenediamine or analogs thereof with ethoxy groups in place of methoxy groups on the silicon; cyclic amidines such as, in particular, 1,8-diazabicyclo[5.4.0]undec-7-ene (DBU), 1,5-diazabicyclo[4.3.0]non-5-ene (DBN), 6-dibutylamino-1,8-diazabicyclo[5.4.0]undec-7-ene; guanidines such as, in particular, tetramethylguanidine, 2-guanidinobenzimidazole, acetylacetoneguanidine, 1,3-di-o-tolylguanidine, 2-tert-butyl-1,1,3,3-tetramethylguanidine, or reaction products of carbodiimides and amines, such as, in particular, polyetheramines or aminosilanes; or imidazoles such as, in particular, N-(3-trimethoxysilylpropyl)-4,5-dihydroimidazole or N-(3-triethoxysilylpropyl)-4,5-dihydroimidazole.

Also suitable are combinations of different catalysts, especially combinations of at least one metal catalyst and at least one nitrogen compound.

Preferred catalysts are organotin compounds, organotitanates, amines, especially aminosilanes, amidines, guanidines or imidazoles.

Preferably, the composition according to the precent invention comprises, based on the total composition, between 0 and 10 wt.-%, preferably between 0 and 2 wt.-%, most preferably between 0 and 1 wt.-% of catalyst **C.**

The composition according to the invention preferably contains at least on plasticizer **PL.** Suitable as plasticizer PL are all compounds that are commonly used as plasticizers in compositions based on silane-functional polymers. Preferably, plasticizer **PL** comprises or consists of carboxylic esters, such as phthalates and/or terephthalates, hydrogenated phthalates and/or hydrogenated terephthalates, trimellitates, adipates, azelates, sebacates, benzoates, glycol ethers, glycol esters, polyols, especially polyether polyols,

Suitable plasticizers **PL** are especially carboxylic esters, such as phthalates, especially diisononyl phthalate (DINP), diisodecyl phthalate (DIDP) or di(2-propylheptyl)phthalate (DPHP), hydrogenated phthalates or cyclohexane-1,2-dicarboxylates, especially hydrogenated diisononyl phthalate or diisononyl cyclohexane-1,2-dicarboxylate (DINCH), terephthalates, especially bis(2-ethylhexyl) terephthalate (DOTP) or diisononyl terephthalate (DINT), hydrogenated terephthalates or cyclohexane-1,4-dicarboxylates, especially hydrogenated bis(2-ethylhexyl) terephthalate or bis(2-ethylhexyl) cyclohexane-1,4-dicarboxylate, or hydrogenated diisononyl terephthalate or diisononyl cyclohexane-1,4-dicarboxylate, isophthalates, trimellitates, adipates, especially dioctyl adipate, azelates, sebacates, benzoates, polyols, especially polyether polyols or polyester polyols, glycol ethers, glycol esters, polyether mono- or polyols having blocked hydroxyl groups, especially in the form of acetate groups, organic phosphoric or sulfonic esters, polybutenes or plasticizers derived from natural fats or oils, especially fatty acid methyl or ethyl esters, also called "biodiesel", or epoxidized soybean or linseed oil.

Preferably, the composition according to the precent invention comprises, based on the total composition, between 0 and 50 wt.-%, preferably between 0 and 25 wt.-%, most preferably between 0 and 20 wt.-% of plasticizer **PL.**

Rheological additives **RA** are in particular thickeners or thixotropy additives, especially sheet silicates such as bentonites, derivatives of castor oil, hydrogenated castor oil, polyamides and/or polyamide waxes, fatty acid amide based substances, polyurethanes, urea compounds, fumed (pyrogenic) silicas, cellulose ethers or hydrophobically modified polyoxyethylenes;
Preferably, the composition according to the precent invention comprises, based on the total composition, between 0 and 15 wt.-%, preferably between 0 and 8 wt.-%, most preferably between 0 and 6 wt.-% of rheological additives **RA.**

The composition according to the invention contains preferably at least one filler **F.** Suitable fillers **F** are all compounds that are commonly used as fillers in compositions based on silane-functional polymers. Suitable fillers **F are** especially ground or precipitated calcium carbonates, optionally coated with fatty acids, especially stearates, barytes, quartz flours, quartz sands, dolomites, wollastonites, calcined kaolins, sheet silicates, such as mica or talc, zeolites, aluminum hydroxides, magnesium hydroxides, silicas, including finely divided silicas from pyrolysis processes, cements, gypsums, fly ashes, industrially produced carbon blacks, graphite, metal powders, for example of aluminum, copper, iron, silver or steel, PVC powders or hollow beads.

Preferably, the filler **F** comprises or consists of metal oxide, in particular aluminium hydroxide and/or magnesium oxide, metal silicates, metal carbonates, in particular calcium carbonates such as ground calcium carbonates (GCC) and/or precipitated calcium carbonates (PCC).

Preferably, the composition according to the precent invention comprises, based on the total composition, between 0 and 5 wt.-%, preferably between 0 and 2 wt.-%, most preferably between 0 and 1 wt.-% of fillers **F.**

The composition according to the invention contains preferably at least one desiccant or drying agent **DA.** Suitable drying agents **DA** are all compounds that are commonly used as desiccants or drying agents in composition based on silane-functional polymers.

Suitable drying agents **DA** are in particular tetraethoxysilane, vinyltrimethoxysilane, vinyltriethoxysilane, phenylmethoxysilane, octyltrimethoxysilane, propyltrimethoxysilane, or organoalkoxysilanes having a functional group in the α-position to the silane group, especially N-(methyldimethoxysilylmethyl)-O-methylcarbamate, (methacryloyloxymethyl)silanes, and methoxymethylsilanes.

Preferably, the drying agent **DA** comprises or consists of vinyltrimethoxysilane, phenylmethoxysilane, octyltrimethoxysilane and propytrimethoxysilane, preferably vinyltrimethoxysilane, and any mixture of these.

Preferably, the composition according to the precent invention comprises, based on the total composition, between 0 and 5 wt.-%, preferably between 0 and 2 wt.-%, most preferably between 0 and 1 wt.-% of drying agents **DA.**

An especially preferred composition according to the precent invention comprises:
- between 0.1 and 10 wt.-%, based on the total composition, of at least one polysulfide-based polymer **PSP** containing reactive terminal silane groups;
- between 15 and 30 wt.-%, based on the total composition, of at least one organic polymer **P** containing reactive terminal silane groups, whereby **P** does not contain any disulfide linkages;
- between 40 and 60 wt.-%, based on the total composition, of at least one filler **F;**
- up to 25 wt.-%, based on the total composition, of at least one plasticizer **PL.**
- up to 2 wt.-%, based on the total composition, of drying agent **DA;**
- up to 2 wt.-%, based on the total composition, of at least one adhesion promoter **AP;**
- up to 2 wt.-%, based on the total composition, of at least one catalyst **C**;
- up to 8 wt.-%, based on the total composition, of rheological additives **RA.**

All the preferred embodiments described for the individual constituents, e.g. organic polymer P or polysulfide-based polymer PSP, of above composition are the same as described in a more general manner further above in the description.

The curable composition according to the present invention is preferably applied at ambient temperature, such as room temperature, preferably within a temperature range between 0°C and 45°C, especially 5°C to 35°C, and cures under these conditions.

In the case of curing by means of air humidity, the composition cures from the outside inward, at first forming a skin on the surface of the composition. What 15 is called the "skin time" or "skin formation time" is a measure of the curing rate of the composition. The speed of curing is generally determined by various factors, for example the availability of water (e.g., relative air humidity), temperature, etc.

The invention further provides the cured composition obtained from the curable composition after contact thereof with moisture.

Another aspect of the present invention is the use of the composition for bonding, coating or sealing of at least one substrate.

Suitable substrates are especially
- glass, glass ceramic, screenprinted ceramic, concrete, mortar, cement screed, fiber cement, especially fiber cement boards, brick, tile, plaster, especially plasterboards or anhydride screed, or natural stone, such as granite or marble;
- metals or alloys, such as aluminum, copper, iron, steel, nonferrous metals, including surface-finished metals or alloys, such as zinc-plated or chromiumplated metals;
- plastics, in particular rigid or flexible polyvinyl chloride (PVC), polycarbonate (PC), polyamide (PA), polyesters, polymethyl methacrylate (PMMA), acrylonitrile butadiene styrene (ABS), styrene acrylonitrile (SAN), epoxy resins, phenolic resins, polyurethanes (PUR), polyoxymethylenes (POM), thermoplastic olefins (TPO), polyethylenes (PE), polypropylenes (PP), ethylene propylene rubber (EPM) or ethylene propylene diene monomer rubber (EPDM), where the surface of the plastics has optionally undergone plasma, corona or flame treatment;
- paints or varnishes, especially automotive topcoats; 30
- repair or leveling compounds based on PCC (polymer-modified cement mortar) or ECC (epoxy resin-modified cement mortar);
- asphalt or bitumen
- leather, textiles, paper, wood, wood-based materials bonded with resins such as phenolic, melamine or epoxy resins, resin-textile composites or other so-called polymer composites;
- insulation foams, especially made of expanded polystyrene (EPS), extruded polystyrene (XPS), PUR, polyisocyanurate (PIR), rock wool, glass wool or foamed glass.

In preferred embodiments the composition is preferably used to adhesively bond, coat or seal plastic substrates, preferably plastic substrates such as polyvinyl chloride (PVC), acrylonitrile butadiene styrene (ABS) and/or glass-fiber reinforced plastic (GFRP).

It is possible to bond, coat or seal one or more substrates. The substrates can be identical or made from different materials.

After the bonding or sealing of substrates, a bonded, coated or sealed article is obtained.

The use of the composition gives rise to an article that is bonded, coated or sealed with the composition. The article is especially an industrially manufactured good or a consumable good, especially a domestic appliance or a mode of transport such as, more particularly, an automobile, a bus, a truck, a rail vehicle, a ship, an aircraft, a drone, or a helicopter; or the article may be an installable component thereof.

The inventive composition is with the exclusion of moisture storage-stable and readily processable.

### Examples

Adduced hereinafter are working examples which are intended to elucidate the invention described in detail. It will be appreciated that the invention is not restricted to these described working examples. The term "standard climatic conditions" refers to a temperature of 23±1°C and a relative air humidity of 50±5%.

### Synthesis of N-(3-trimethoxysilylpropyl)aminosuccinate

In a reaction vessel, a 508 g 3-aminopropyl trimethoxy silane (KBM-903, from Shin-Etsu Silicon) was introduce and a 488 g diethyl maleate were slowly added with continuous mixing at room temperature (23°C). The Michael addition exothermic reaction was probed by using IR spectroscopy to confirm the end of the reaction. A secondary amine having two diethyl easter groups and a trimethoxy silane terminal group (L-1) was collected after cooling down to room temperature (23°C) overnight. IR spectroscopy indicated that the final secondary amine product with almost 100% conversion was obtained.

### Synthesis of organic polymer P

Under moisture exclusion, 3'000 g polyoxypropylene diol (Polyol Acclaim^{®} 12200 from Covestro, molecular weight 10'000 g/mol, OH number 11.2 mg KOH/g), 155 g isophorone diisocyanate (Vestanat^{®} IPDI from Evonik Industries), 414 g diisodecyl phthalate (DIDP) and 0.42 g dibutyltin dilaurate (DBTL) were heated to 90°C with constant stirring and left at this temperature to give a polyurethan prepolymer terminated by isocyanate groups with the titrimetrically determined content of free isocyanate groups of 0.8 wt.-%. Subsequently, 242 g diethyl N-(3-trimethoxysilylpropyl)aminosuccinate was added to the reaction vessel. The total consumption of the isocyanate groups was checked by IR spectroscopy. The silane-functional polymer **P** was cooled to room temperature and stored under exclusion of moisture.

### Synthesis of reference polymer RP

206.40 g of propylene glycol initiated propoxylated polyether (Voranol^{™} 1010 L Polyol from Dow Chemical) was added to a speedmixer^{®} beaker together with 0.19 g of 10% 1,4-diazabicyclo[2.2.2]octane (DABCO) in 1,2-cyclohexane dicarboxylic acid diisonyl ester (DINCH), 83.58 g of 3-isocyanatopropyltrimethoxy silane (AB143694 from abcr GmbH) and was mixed under nitrogen atmosphere two times for 30 seconds each at 2750 rpm. The mixture was transferred to a glass container and then put in an oven at 60°C for 7 days to complete the reaction. The completion of the reaction was checked by IR where no NCO signal should be visible. To stabilize the prepolymer, 1.38 g of vinyltrimethoxy silane (VTMS) were added and mixed for 30 seconds at 2750 rpm.

### Synthesis of polysulfide prepolymer PSP-1

202.52 g of bis-(ethylene oxy) methane containing disulfide linkages (Thikol^{®} LP-33) was added to a speedmixer^{®} beaker together with 0.20 g of 1,4-diazabicyclo[2.2.2]octane (DABCO) and 87.29 g of *γ*-glycidoxypropyltrimethoxy silane and was mixed under nitrogen atmosphere two times for 30 seconds each at 2750 rpm. The mixture was transferred to a glass container and then put in an oven at 60°C for 7 days to complete the reaction. The completion of the reaction was checked by IR where no SH signal should be visible. To stabilize the prepolymer, 1.38 g of vinyltrimethoxy silane (VTMS) were added and mixed for 30 seconds at 2750 rpm.

### Synthesis of polysulfide prepolymer PSP-2

202.52 g of bis-(ethylene oxy) methane containing disulfide linkages (Thikol^{®} LP-33) was added to a speedmixer^{®} beaker together with 0.20 g of 10% 1,4-diazabicyclo[2.2.2]octane (DABCO) in 1,2-cyclohexane dicarboxylic acid diisonyl ester (DINCH), 82.25 g of isophorone diisocyanate (IPDI) and 130.04 g of diethyl N-(3-trimethoxysilylpropyl)aminosuccinate and 1.35 g of vinyltrimethoxy silane (VTMS) and was mixed under nitrogen atmosphere two times for 30 seconds each at 2750 rpm. The mixture was transferred to a glass container and then put in an oven at 60°C for 7 days to complete the reaction. The completion of the reaction was checked by IR where no SH signal should be visible. To stabilize the prepolymer, 1.38 g of vinyltrimethoxy silane (VTMS) were added and mixed for 30 seconds at 2750 rpm.

### Compositions

Two sets of example compositions were made.

The unfilled admixture consists of organic polymer **P,** reactive plasticizer **RP,** polysulfide-based polymer **PSP,** adhesion promoter **AP** and catalyst **C1.**

The filled admixture additionally consists of drying agent **DA,** plasticizer **PL,** filler F (GCC and PCC), rheological additive **RA** and catalysts **C1** or **C2.**

### Mechanical Tests

The **tensile strength,** the **elongation at break,** and the **modulus of elasticity** at 0.5-100% elongation were determined according to DIN 53504 (tensile speed: 200 mm/min) on films with a layer thickness of 2 mm, cured for 7 days at 23°C.

The **tear propagation resistance** was determined according to DIN 53515, on films with a layer thickness of 2 mm, cured for 7 days at 23°C.

The **tack free time** was determined by tapping the surface of a freshly mixed quantity of approximately 3 grams, under standard climatic conditions, at regular intervals using a pipette made of LDPE until no residue remained on the pipette for the first time.

The **Cut-off String** was determined at standard climatic conditions. A Teflon test cylinder (diameter 20mm) was penetrated at a depth of 5mm into the sealant sample of thickness 10 mm at a speed of 25cm/4s. After a short time, the test cylinder was removed and a sealant string is generated by the cylinder. The length of this string is defined as cut-off string.

For the determination of the **extrusion force** the compositions were dispensed into internally coated aluminum cartridges (outer diameter 46.9 mm, inner diameter 46.2 mm, length 215 mm, metric ISO thread M15×1.5 mm) and given an airtight seal with a polyethylene stopper. After conditioning for 24 hours at 23°C, the cartridges were opened and the contents extruded using an extrusion device. For this purpose, a nozzle with a 5 mm inside-diameter opening was screwed onto the cartridge thread. Using an extrusion device (Zwick/Roell Z005), a determination was made of the force needed to extrude the composition at an extrusion rate of 60 mm/min. The figure reported is a value measured after an extrusion distance of 3 mm.

The **Shore A** hardness was determined according to DIN 53505 on samples with a layer thickness of 6 mm, cured for 7 days at 23°C.

### Adhesion Tests

The filled and unfilled compositions were tested for their adhesion properties using a bead adhesion test according to ISO 21194.

The substrates for adhesion testing were made from polyvinyl chloride (PVC), glass fiber reinforced plastic (GFK) or acrylonitrile butadiene styrene (ABS) and eloxated aluminium (Al Elox). The substrates were partially cleaned with isopropyl alcohol and Sika Activator before application. Different curing conditions were tested, namely curing for 7 days at standard conditions (7d RT), immersion in water for 7 days (7d H₂O), curing for 1 day at 80°C. (1d 80°C) or curing for 7 days at 70°C at 100% relative humidity (7d cataplasm).

The adhesion was then evaluated according to the following codes:
1 > 95% cohesive failure
2 75-95% cohesive failure
3 25-75% cohesive failure
4 < 25% cohesive failure

While the rest to 100% describes the amount of undesired adhesive failure.

### Compounds used

**Table 1: Compounds used for the example compositions.**

| **Name** | **Description** | **Trade name** |
|---|---|---|
| Adhesion Promoter (**AP**) | N-(n-Butyl)-3-aminopropyltrimethoxy silane | Dynasylan^{®} 1189 (Evonik) |
| Catalyst (**C1**) | Dibutyltin dilaurate (DBTDL) | |
| Catalyst (**C2**) | Diazabicycloundecen (DBU) | Lupragen^{®} N700 (BASF SE) |
| Catalyst (**C3**) | dioctyltin diacetate | NEOSTANN^{™} S-1 (Nitto Kasei Co., Ltd.) |
| Plasticizer (**PL**) | Linear polypropylene ether polyol | Acclaim^{®} Polyol 4200 (Covestro) |
| Precipitated Calcium Carbonate (**PCC**) | Ultrafine coated precipitated calcium carbonate | Socal^{®} U1S2 (Imerys) |
| Ground Calcium Carbonate (**GCC**) | Powder ground calcium carbonate | Omyacarb 5-GU (Omya) |
| Rheological Additive (**RA**) | Organically modified castor oil derivative | Thixatrol^{®} ST (Elementis) |
| Drying Agent (**DA**) | Vinyltrimethoxy silane | Silquest A-171^{™} (Momentive) |

### Compositions

Comparative examples are identified in Tables 2 to 7 by "(Ref.)".

**Table 2: Composition of admixtures used in material tests. Values are in wt.-% totaling 100%.**

| **Unfilled composition** | | **E1** (Ref.) | **E2** (Ref.) | **E3** | **E4** |
|---|---|---|---|---|---|
| **P** | | 97.00 | 48.50 | 48.50 | 48.50 |
| **RP** | | - | 48.50 | - | - |
| **PSP** | **PSP-1** | - | - | 48.50 | - |
| | **PSP-2** | - | - | - | 48.50 |
| **AP** | | 2.00 | 2.00 | 2.00 | 2.00 |
| **C1** | | 1.00 | 1.00 | 1.00 | 1.00 |

**Table 3: Composition of admixtures in filled systems used in material tests. Values are in wt.-% totaling 100%**

| **Filled composition** | **E5** (Ref.) | **E6** | **E7** |
|---|---|---|---|
| **P** | 26.00 | 24.71 | 22.13 |
| **PSP-1** | - | 1.29 | 3.87 |
| **AP** | 1.00 | 1.00 | 1.00 |
| **DA** | 1.00 | 1.00 | 1.00 |
| **PL** | 19.75 | 19.75 | 19.75 |
| **PCC** | 15.00 | 15.00 | 15.00 |
| **GCC** | 30.00 | 30.00 | 30.00 |
| **RA** | 5.50 | 5.50 | 5.50 |
| **C2** | 0.25 | 0.25 | 0.25 |
| **C3** | 1.50 | 1.50 | 1.50 |

### Mechanical tests results

**Table 4: Mechanical tests of unfilled composition.**

| **Test results (unfilled)** | **E1** (Ref.) | **E2** (Ref.) | **E4** |
|---|---|---|---|
| **Tensile strength (MPa)** | 0.54 | 0.76 | 2.83 |
| **Elongation at break (%)** | 73.8 | 75.5 | 142.3 |
| **E modulus (MPa) 0-5%** | 0.96 | 1.12 | 4.05 |

**Table 5: Mechanical tests of filled composition.**

| **Test results (filled)** | | **E5** (Ref.) | **E6** | **E7** |
|---|---|---|---|---|
| **Tensile strength (MPa)** | | 1.59 | 1.43 | 1.14 |
| **Elongation at break (%)** | | 713 | 566 | 373 |
| **E modulus (MPa)** | **0-5%** | 0.99 | 1.23 | 2.17 |
| | **0-25%** | 0.71 | 0.86 | 1.50 |
| | **0-50%** | 0.55 | 0.66 | 1.10 |
| | **0-100%** | 0.40 | 0.45 | 0.71 |
| **Tear propagation (N/mm)** | | 6.25 | 5.18 | 4.24 |
| **Tack free time (min)** | | 42 | 50 | 95 |
| **Cut-off string (mm)** | | 69 | 66 | 60 |
| **Extrusion force (N)** | | 874 | 734 | 669 |
| **Shore-A** | | 26 | 30 | 34 |

### Adhesion tests results

**Table 6: Adhesion tests of unfilled composition**

| **Test results (unfilled)** | | **E1** (Ref.) | **E3** |
|---|---|---|---|
| **7d RT** | **PVC** | 4 | 1 |
| | **GFK** | 4 | 2 |
| | **Al Elox** | 4 | 2 |
| | **ABS** | 4 | 4 |

**Table 7: Adhesion tests of admixtures in filled systems.**

| **Test results (filled)** | | **E5** (Ref.) | **E6** | **E7** |
|---|---|---|---|---|
| **7d RT** | **PVC** | 4 | 1 | 1 |
| | **GFK** | 3 | 1 | 1 |
| | **Al Elox** | 3 | 3 | 1 |
| | **ABS** | 4 | 1 | 1 |
| **7d H₂O** | **PVC** | 4 | 1 | 1 |
| | **GFK** | 1 | 1 | 1 |
| | **Al Elox** | 1 | 1 | 1 |
| | **ABS** | 4 | 1 | 1 |
| **1d 80°C** | **PVC** | 1 | 1 | 1 |
| | **GFK** | 1 | 1 | 1 |
| | **Al Elox** | 1 | 1 | 1 |
| | **ABS** | 4 | 3 | 1 |
| **7d Cataplasm** | **PVC** | 1 | 1 | 1 |
| | **GFK** | 4 | 4 | 3 |
| | **Al Elox** | 2 | 2 | 2 |
| | **ABS** | 4 | 4 | 1 |

## Claims

1. A one-component composition comprising
- at least one organic polymer **P** containing reactive terminal silane groups, whereby **P** does not contain any disulfide linkages;
- at least one polysulfide-based polymer **PSP** containing reactive terminal silane groups;
- preferably at least one adhesion promoter **AP;**
- preferably at least one catalyst **C;**
- optionally at least one plasticizer **PL**;
wherein the mass ratio of organic polymer **P** to polysulfide-based polymer **PSP** ranges from 300:1 to 1:1, preferably from 20:1 to 1:1, most preferably from 10:1 to 5:1.

2. The one-component composition according to claim 1, **characterized in that** the organic polymer **P** and/or polymer **PSP** have reactive terminal silane groups of the formula (I) 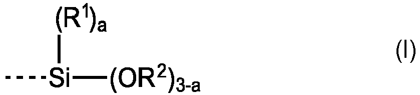 wherein
R¹ is a linear or branched, monovalent hydrocarbyl radical having 1 to 8 carbon atoms, preferably methyl or ethyl;
R² is a linear or branched, monovalent alkoxy radical having 1 to 10 carbon atoms and which optionally contains one or more C-C multiple bonds, and/or cycloaliphatic, and/or aromatic moieties, especially methyl or ethyl or isopropyl;
a has a value of 0 or 1 or 2, preferably 0 or 1, especially 0.

3. The one-component composition according to preceding claims, **characterized in that** the polysulfide-based polymer **PSP** is a polymer product obtained by reacting a thiol-containing polysulfide prepolymer **PS** either with
i) an organoalkoxysilane that contains a terminal epoxy group; or
ii) a monomeric diisocyanate and subsequent endcapping of the remaining isocyanate group with an organoalkoxysilane that contains an amino group, a hydroxy group, or a mercapto group;
or
iii) an isocyanate-containing organoalkoxysilane.
or
iv) an alkene-containing organoalkoxysilane.

4. The one-component composition according to preceding claims, **characterized in that** the thiol-containing polysulfide prepolymer **PS** is according to formula (III) 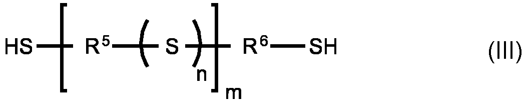 wherein
R⁵ is a linear or branched, monovalent hydrocarbon radical having 1 to 8 carbon atoms and which optionally contains one or more heteroatoms, especially oxygen, preferably a polyether;
R⁶ is a linear or branched, monovalent hydrocarbon radical having 1 to 8 carbon atoms and which optionally contains one or more heteroatoms, especially oxygen, preferably a polyether;
n is between 2 and 4, preferably 2;
m is between 1 and 25, preferably between 5 and 10.

5. The one-component composition according to preceding claims, **characterized in that** the backbone of the organic polymer **P** is a polyether, in particular a polyoxyethylene, polyoxypropylene or polyoxypropylenepolyoxyethelyene, a polyurethane, a poly(meth)acrylate or a polybutadiene or any mixture of these backbones.

6. The one-component composition according to preceding claims, **characterized in that** the adhesion promoter **AP** is according to formula (II) 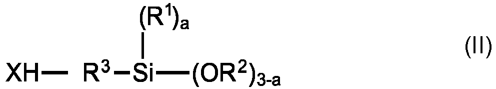 wherein
R¹ is a linear or branched, monovalent hydrocarbyl radical having 1 to 8 carbon atoms;
R² is a linear or branched, monovalent alkoxy radical having 1 to 10 carbon atoms and which optionally contains one or more C-C multiple bonds, and/or cycloaliphatic, and/or aromatic moieties, preferably methyl, ethyl or isopropyl, most preferably methyl;
R³ is a divalent hydrocarbyl radical having 1 to 12 carbon atoms that optionally has one or more C-C multiple bonds, cyclic and/or aromatic moieties and optionally one or more heteroatoms, especially an amido, carbamate or morpholino group;
X is O, S or NR⁴ where R⁴ is H or a monovalent hydrocarbyl radical having 1 to 20 carbon atoms that optionally has heteroatoms in the form of alkoxysilyl, ether or carboxylic ester groups.
a is 0, 1 or 2, especially 0 or 1.

7. The one-component composition according to preceding claims, **characterized in that** catalyst **C** comprises or consists of metal-organic compounds and/or nitrogen compounds, such as, organotin compounds, organotitanates, amines, amidines, guanidines or imidazoles.

8. The one-component composition according to preceding claims, **characterized in that** plasticizer **PL** comprises or consists of carboxylic esters, such as phthalates and/or terephthalates, hydrogenated phthalates and/or hydrogenated terephthalates, trimellitates, adipates, azelates, sebacates, benzoates, glycol ethers, glycol esters, polyols, especially polyether polyols,

9. The one-component composition according to preceding claims, **characterized in that** the monomeric diisocyanate is an aliphatic, cycloaliphatic or aromatic isocyanate, in particular methylene diphenyl diisocyanate (MDI), toluene diisocyanate (TDI) and isophorone diisocyanate (IPDI), preferably MDI and IPDI.

10. A one-component composition according to the preceding claims comprising
- between 0.1 and 10 wt.-%, based on the total composition, of at least one polysulfide-based polymer **PSP** containing reactive terminal silane groups;
- between 15 and 30 wt.-%, based on the total composition, of at least one organic polymer **P** containing reactive terminal silane groups, whereby **P** does not contain any disulfide linkages;
- between 40 and 60 wt.-%, based on the total composition, of at least one filler **F;**
- up to 25 wt.-%, based on the total composition, of at least one plasticizer **PL.**
- up to 2 wt.-%, based on the total composition, of drying agent **DA;**
- up to 2 wt.-%, based on the total composition, of at least one adhesion promoter **AP;**
- up to 2 wt.-%, based on the total composition, of at least one catalyst **C;**
- up to 8 wt.-%, based on the total composition, of rheological additives **RA.**

11. The one-component composition according to claim 10, **characterized in that** the filler **F** comprises or consists of metal oxide, in particular aluminium hydroxide and/or magnesium oxide, metal silicates, metal carbonates, in particular calcium carbonates such as ground calcium carbonates (GCC) and/or precipitated calcium carbonates (PCC).

12. The one-component composition according to claim 10, **characterized in that** the drying agent **DA** comprises or consists of vinyltrimethoxysilane, phenylmethoxysilane, octyltrimethoxysilane and propytrimethoxysilane, preferably vinyltrimethoxysilane, and any mixture of these.

13. A cured composition obtained from the curable composition according to claims 1 to 12 after contact thereof with moisture.

14. An article bonded, coated or sealed by the composition according to claims 1 to 12.

15. Use of a one-component composition according to preceding claims to adhesively bond, coat or seal substrates, especially plastic substrates such as polyvinyl chloride (PVC), acrylonitrile butadiene styrene (ABS) and/or glass-fiber reinforced plastic (GFRP).
